Europäisches Patentamt

European Patent Office

Office européen des brevets

(19)

(11) Numéro de publication: **0 269 482**
**B1**

(12) **FASCICULE DE BREVET EUROPEEN**

(45) Date de publication du fascicule du brevet:
**16.05.90**

(51) Int. Cl.⁵: **G01V 1/40**, G01V 1/28

(21) Numéro de dépôt: **87402377.3**

(22) Date de dépôt: **22.10.87**

(54) **Procédé de détection des hétérogénéités et/ou de détermination de caractéristiques pétrophysiques de couches géologiques d'un milieu à explorer.**

(30) Priorité: **28.10.86 FR 8614962**

(43) Date de publication de la demande:
**01.06.88 Bulletin 88/22**

(45) Mention de la délivrance du brevet:
**16.05.90 Bulletin 90/20**

(84) Etats contractants désignés:
**DE ES GB IT NL**

(56) Documents cités:
**EP-A- 0 162 786**
**US-A- 4 131 875**

(73) Titulaire: **SOCIETE NATIONALE ELF AQUITAINE (PRODUCTION), Tour Elf 2, Place de la Coupole La Défense 6, F-92400 Courbevoie(FR)**

(72) Inventeur: **Gras, Claude, 10, rue Pasteur, F-78110 Le Vésinet(FR)**
Inventeur: **Arditty, Patricia, 27, avenue de l'Abreuvoir, F-78160 Marly Le Roi(FR)**
Inventeur: **Staron, Phillipe, 9, rue François Barbin, F-91540 Mennecy(FR)**

(74) Mandataire: **Levy, David et al, c/o S.A. Fedit-Loriot 38, avenue Hoche, F-75008 Paris(FR)**

## Description

La présente invention concerne un procédé de détection des hétérogénéités et/ou de détermination de caractéristiques pétrophysiques de couches ou formations géologiques d'un milieu à explorer.

La connaissance de la structure d'une formation compacte dans laquelle est situé un gisement ou réservoir, est de plus en plus améliorée afin de mieux définir les conditions de production du gisement, les réserves du gisement ainsi que le taux de récupération des hydrocarbures susceptibles d'être emprisonnés dans la formation compacte.

La détermination d'un certain nombre de caractéristiques est essentielle pour l'étude et l'analyse de la structure. Parmi ces caractéristiques, on peut citer la saturation, la porosité, la perméabilité et la fracturation.

La saturation et la porosité d'une formation sont très accessibles par des techniques usuelles qui ne sont pas toujours faciles à mettre en oeuvre. Toutefois, elles semblent être maîtrisées et en tout cas, elles donnent des résultats satisfaisants.

Par contre, la perméabilité et la fracturation sont plus difficiles à déterminer in situ car elles peuvent être étroitement liées. Ceci provient de ce que la perméabilité due à la présence de fractures dans la formation du milieu à explorer est en général très élevée et supérieure à la perméabilité matricielle dont la définition sommaire est la capacité d'une couche poreuse non fracturée à laisser circuler un fluide. ·

Lors de l'exploitation d'un gisement contenant des hydrocarbures, il est très important de déterminer si on est en présence d'une roche ou couche fracturée, de manière à éventuellement améliorer l'écoulement des fluides du gisement à travers ladite roche ou couche de la formation. En effet, la détermination de fractures existant dans telle ou telle zone est un facteur qui intervient lors des décisions à prendre au cours de la mise en production d'un puits. C'est ainsi qu'on perfore en priorité les zones fracturées contenant des hydrocarbures, ou qu'on veut connaître les contraintes in situ développées dans certaines zones afin de décider d'une éventuelle fracturation par des moyens mécaniques ou de tout autre type tel qu'hydraulique.

En conséquence il a été développé et proposé de nombreux procédés et outils correspondants capables d'accéder à une détermination précise de la fracturation d'une formation.

Parmi les procédés non acoustiques, on peut citer celui connu sous la dénomination MEST. Dans ce procédé, les mesures sont effectuées par diagraphie électrique ou électromagnétique, à l'aide d'un outil qui est descendu dans le puits. Toutefois, les mesures sont peu nombreuses en raison de la durée d'immobilisation du puits pendant les mesures, et du temps relativement long mis pour acquérir et traiter les informations recueillies par les capteurs de l'outil. De plus, ce type de diagraphie non acoustique ne peut concerner que les premiers centimètres des formations entourant le puits et surtout ne peut pas être utilisé dans des puits tubés, en raison de la présence d'un tubage métallique.

Les diagraphies soniques sont également peu aptes à déterminer la présence de fractures dans les formations pour la simple raison qu'elles ne font pas de différence entre une fracture réelle existant dans la formation et par exemple une microfissure située dans la paroi du puits. En effet, de telles diagraphies détectent toute anomalie de la paroi ayant absorbé une partie de l'énergie émise par les émetteurs de l'outil de mesure. D'ailleurs, il faut noter que la présence d'une cave ou déformation locale dans la paroi du puits est analysée de la même manière qu'une microfissure ou une fracture. Dans ces conditions, il faudrait recourir à d'autres mesures pour déterminer si l'anomalie détectée est due à telle ou telle modification de la structure des formations entourant le puits. Enfin, les diagraphies soniques doivent être effectuées dans des puits non tubés car le traitement des signaux utilisé dans ces diagraphies est inapproprié aux puits tubés.

Un autre procédé sonique consiste à utiliser ce qu'il est convenu d'appeler le "saut de cycles". Un "saut de cycles" est un temps de transit de l'onde de compression mesuré entre deux pointés de deux ondes différentes, l'un des pointé étant décalé d'au moins une période par rapport à l'autre.

Les sauts de cycle que l'on observe sur les enregistrements sont dus à des variations d'amplitude entre les deux ondes pointées, ces variations d'amplitude pouvant être attribuées à des fractures lorsqu'elles existent, mais également aux caves, à un pointé défectueux, en avance ou en retard, de l'arrivée de l'onde de compression, au bruit, ou à des modifications de la structure lithologique entre des transducteurs. Il s'ensuit que cette technique du saut de cycle ne présente pas un caractère absolu de répétitivité. De toutes les manières, elle n'est pas adaptée non plus aux puits tubés.

Enfin, il a été proposé un ensemble de techniques d'interprétation connu sous la dénomination DET-FRA qui, en principe, est destiné à la détermination de fractures. En utilisant un outil dénommé "ARRAY SONIC" on mesure et on calcule l'amplitude des ondes de compression P et des ondes de cisaillement S. En présence de fractures, l'onde P arrivant sur une fracture pentée donne naissance à une onde de cisaillement qu'on appellera pour plus de commodité $S_P$. Les récepteurs reçoivent, en conséquence, les ondes de cisaillement S habituelles plus celles $S_P$ générées par les ondes de compression P sur les fractures pentées. L'amplitude des ondes $S + S_P$ reçues sur les récepteurs est donc plus grande que celle des ondes S seules lorsqu'il n'y a pas de fractures. Quant à l'amplitude de l'onde P, elle est plus faible en présence de fractures. On mesure alors la variation du rapport amplitude P sur amplitude de $S + S_P$. Lorsque le rapport diminue, on en déduit qu'il y a des fractures.

Néanmoins, ce nouveau procédé est limité dans ses applications. En effet, pour qu'une onde $S_P$ soit créée par une onde P, il est nécessaire que la fracture générant de telles ondes $S_P$ présente une pente importante. Dans le cas d'une fracture sub-horizontale par exemple, il n'y a pas création d'une onde $S_P$ et alors les mesures conduisent à une non existence ou absence d'une fracture alors qu'en réalité il y en a une. Dans une zone à fractures multiples, il n'y a plus un seul plan de réflexion comme c'est le cas pour une seule fracture, mais plusieurs plans de réflexion avec diverses orientations. Dans ces conditions, il sera difficile pour ne pas dire impossible de déterminer la variation du rapport des amplitudes mesurées précédemment. De plus, on sait que d'autres phénomènes tels que bancs minces pentés, fluide, etc. peuvent conduire à la naissance des ondes $S_P$ à partir des ondes P sans qu'il y ait des fractures dans la zone considérée. Enfin, le rapport des amplitudes des ondes $P/S_P + S$ peut varier pour d'autres raisons que des fractures. Il en est notamment ainsi lors d'un changement lithologique ou de contenu en fluide de la zone considérée. Ainsi, il est difficile d'admettre qu'un tel procédé soit réellement discriminant.

Une technique classique de diagraphie qui permet de déterminer les caractéristiques physiques des formations entourant et situées à proximité de l'ordre du mètre, d'un puits foré, consiste à créer, au moyen d'un ou plusieurs transducteurs émetteurs, une énergie acoustique qui se propage dans tout ou partie desdites formations avant d'atteindre un ou plusieurs transducteurs-récepteurs qui délivrent des signaux qui sont enregistrés sur un support d'enregistrement situé, en général, en surface du milieu à explorer. Les signaux enregistrés sont ensuite traités de manière, d'une part, à pouvoir séparer notamment, les ondes de compression ou ondes P des ondes de cisaillement ou ondes S, et, d'autre part, à calculer les différentes vitesses acoustiques moyennes desdites ondes dans les formations.

Un effort important a été entrepris pour améliorer les outils utilisés dans cette diagraphie et le traitement des signaux enregistrés.

Dans la demande française No 2 431 710 sont décrits un outil et un procédé de diagraphie acoustique, dénommés commercialement EVA, qui apportent des solutions originales aux problèmes posés par les outils et procédés classiques.

La demande française No 2 568 020 concerne un procédé de traitement des signaux enregistrés, qui consiste à grouper des fonctions d'intercorrélation élémentaires en au moins une famille dans laquelle les espaces de mesure sont inclus dans un même espace de référence prédéterminé, à transformer les variables temps desdites fonctions pour ramener la dimension de l'espace de mesure à celle de référence, puis à additionner les fonctions transformées.

Ces procédés présentent l'avantage considérable de pouvoir séparer toutes les ondes reçues y compris les ondes de STONELEY notamment par la technique de corrélation. Toutefois, les spécialistes de la diagraphie acoustique ne s'intéressaient qu'aux ondes de compression P et de cisaillement S dont on connaissait parfaitement l'importance dans l'élaboration des logs de vitesses qui permettaient une meilleure connaissance de certaines caractéristiques pétrophysiques des couches traversées par le puits.

Or, il s'est avéré que les ondes de STONELEY ou les pseudo-ondes de RAYLEIGH pouvaient être étudiées et contribuer à une meilleure connaissance des formations traversées par un puits. Les travaux conduits par MM. TOKSÖZ du MIT et MATHIEU D'ELF AQUITAINE ont abouti à la conclusion que l'onde de STONELEY est affectée en présence de fractures très largement ouvertes, l'onde de STONELEY étant, en fait, très atténuée par lesdites fractures. Le mécanisme physique qui lie ces concepts est basé sur un transfert d'énergie sous la forme d'un passage ou écoulement de fluide à l'intérieur de formations perméables (SEG. Atlanta 1984).

En poursuivant ses recherches sur les diverses ondes se propageant dans un milieu, la demanderesse a trouvé un nouveau procédé de détection des hétérogénéités présentes dans les formations entourant un puits foré.

Un objet de la présente invention est donc un procédé de détection desdites hétérogénéités et/ou de détermination des caractéristiques pétrophysiques desdites formations qui permet notamment de détecter la présence ou non de fractures. Le procédé peut également être mis en oeuvre pour la détection de zones perméables comprenant ou non des fractures.

Les essais effectués ont montré que même de petites fractures pouvaient être détectées et ce, dans des zones perméables alors que les techniques antérieures avaient échoué.

Le procédé selon l'invention est du type consistant à sélectionner les enregistrements obtenus à partir d'au moins trois transducteurs dont un est un émetteur et un autre est un récepteur, de manière à rassembler des paires d'enregistrements à émetteur ou récepteur commun, et il est caractérisé en ce qu'il consiste, en outre, à déterminer pour des zones d'intérêt préalablement sélectionnées les amplitudes moyennes des ondes reçues en fonction de la profondeur ; à élaborer, à partir desdites amplitudes moyennes, des logs d'atténuation desdites ondes ; à sélectionner parmi les logs d'atténuation ceux relatifs à l'onde de cisaillement et à l'onde dite de STONELEY ; à déterminer pour chaque zone la valeur moyenne de chacun desdits logs d'atténuation sélectionnés ; à repérer dans ladite zone et sur lesdits logs d'atténuation sélectionnés les pics d'atténuation supérieurs à une valeur de seuil prédéterminée ; à comparer pour chaque zone au moins les pics du log d'atténuation de l'onde de cisaillement par rapport à la valeur moyenne correspondante de la partie du log d'atténuation de l'onde de STONELEY de manière à déterminer les variations importantes relatives des atténuations, lesdites variations étant significatives des hétérogénéités ou des caractéristiques pétrophysiques de la couche géologique située autour de ladite zone.

D'autres avantages et caractéristiques apparaîtront à la lecture d'un mode de réalisation de l'invention, donné à titre indicatif mais non limitatif, ainsi que des dessins annexés sur lesquels :

La figure 1 est une représentation schématique d'un puits foré dans lequel est disposé un outil de diagraphie.

La figure 2 est une représentation synoptique d'une séquence classique de diagraphie.

La figure 3 est une représentation d'une séquence composite constituée à partir de la séquence classique de la figure 2.

La figure 4 est une représentation d'une autre séquence composite constituée à partir de la séquence classique de la figure 2.

Les figures 5 à 8 représentent des parties adjacentes d'une section profondeur-temps obtenue au moyen de l'outil représenté sur la figure 1.

La figure 9 est une représentation des logs d'atténuation des ondes de cisaillement et de STONELEY correspondant à la section représentée sur les figures 5 à 8.

Le procédé selon l'invention a été mis en oeuvre à l'aide de l'outil de diagraphie dénommé "EVA" qui comprend seize transducteurs dont quatre $E_1$ à $E_4$ sont des émetteurs, les douze autres transducteurs étant des récepteurs $R_1$ à $R_{12}$. L'outil est descendu dans un puits 1 foré verticalement dans un milieu à explorer 2, au moyen d'un câble 3 s'enroulant autour d'une poulie 4 et dont le mouvement est commandé à partir de moyens de commande 5. Un enregistreur 6, disposé à la surface 7 du milieu, enregistre les signaux reçus sur les récepteurs $R_1$ à $R_{12}$ et acheminés par le câble 3. Les émetteurs $E_1$ à $E_4$ sont séparés par un intervalle constant et égal, par exemple, à 0,25 m. Les récepteurs $R_1$ à $R_{12}$ sont séparés les uns des autres par un intervalle constant, égal par exemple à 1 m. L'intervalle entre le dernier émetteur $E_4$ et le premier récepteur $R_1$ est par exemple égal à 1 mètre.

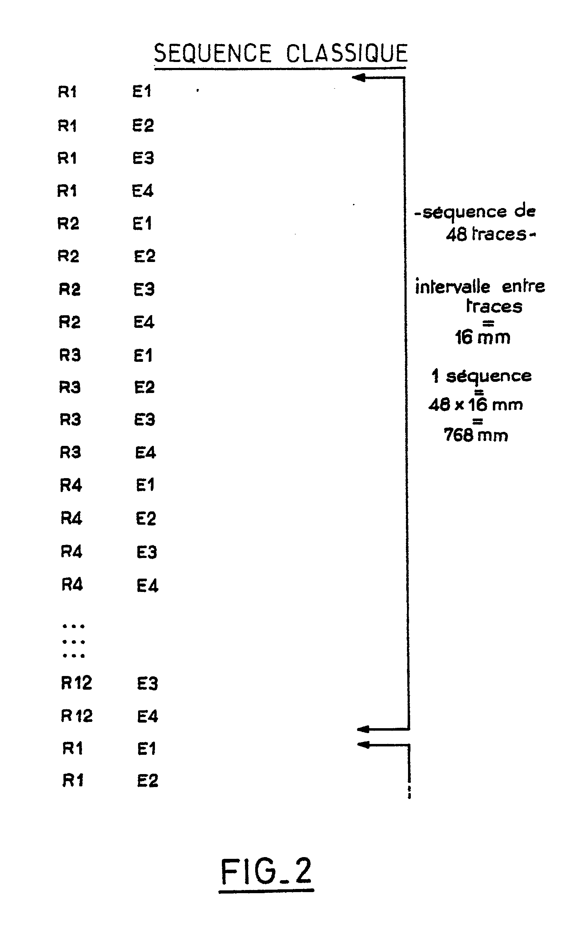

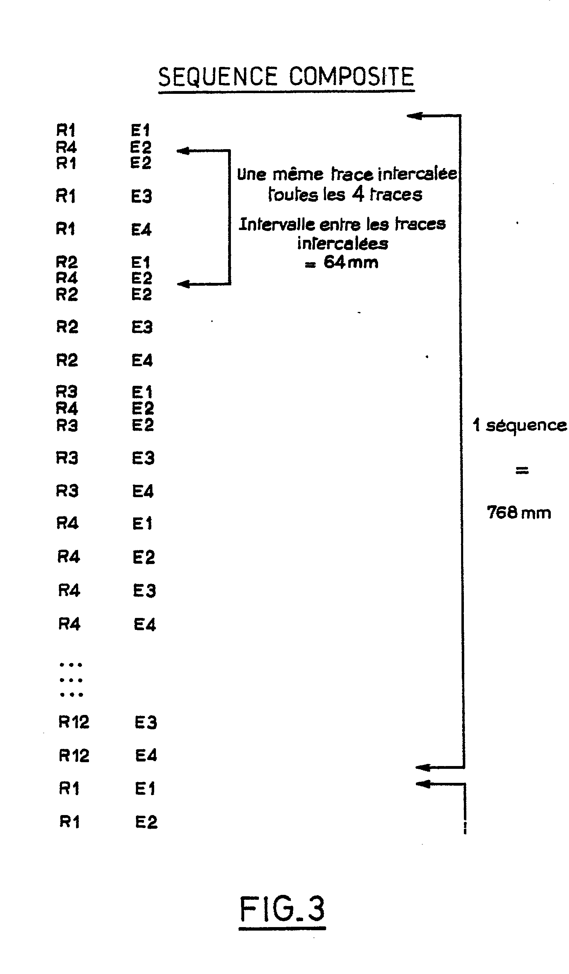

Chaque émission d'une onde acoustique par un des émetteurs $E_1$ à $E_4$ est reçue sur chacun des récepteurs $R_1$ à $R_{12}$, puis enregistrée sur l'enregistreur 6. Une telle séquence d'émission et de réception ou enregistrement est bien connue et produit ce qu'on appelle une séquence conventionnelle de 48 enregistrements ou traces avec un intervalle entre les traces par exemple de 16 mm. C'est ce qui est représenté schématiquement sur la figure 2. A partir de la séquence conventionnelle, on réalise une séquence composite en intercalant régulièrement entre les enregistrements de la séquence une trace correspondant à un couple émetteur-récepteur donné, choisi en fonction des critères relatifs aux objectifs de la mesure (notamment étude de la qualité de la cimentation, détection d'évènements pentés, étude de la zone envahie). Dans l'exemple de la figure 3, on intercale entre la trace $R_1$ $E_1$ produite par une onde émise par l'émetteur $E_1$ et reçue sur le récepteur $R_1$ d'une part, et la trace $R_1$ $E_2$ produite par une onde émise par l'émetteur $E_2$ et reçue sur le récepteur $R_1$, une autre trace No1 $R_4$ $E_2$ produite par une onde émise par l'émetteur $E_2$ et reçue sur le récepteur $R_4$. La trace $R_4$ $E_2$ est intercalée dans chaque sous-séquence constituée par les quatre émetteurs $E_1$ à $E_4$ et chacun des récepteurs $R_1$ à $R_{12}$. Dans cet exemple, la trace $R_4$ $E_2$ est répétée toutes les quatre traces, l'intervalle entre deux traces intercalées étant égal à 64 mm (4 x 16 mm). De ce fait une séquence telle que représentée sur la figure 3 correspond à un déplacement de 768mm de l'outil dans le puits.

Le choix de la trace intercalée $R_4$ $E_2$ est motivé par l'étude de la qualité de la cimentation. En général, ce critère implique d'intercaler des traces dont le trajet acoustique est court. Dans le cas où on s'intéresserait aux événements pentés, on choisirait un trajet acoustique moyen, par exemple correspondant à un des émetteurs associé à un des récepteurs $R_7$ à $R_9$. Pour l'étude de la zone envahie, on choisirait un trajet acoustique long correspondant par exemple à un couple émetteur $E_2$-récepteur $R_{11}$.

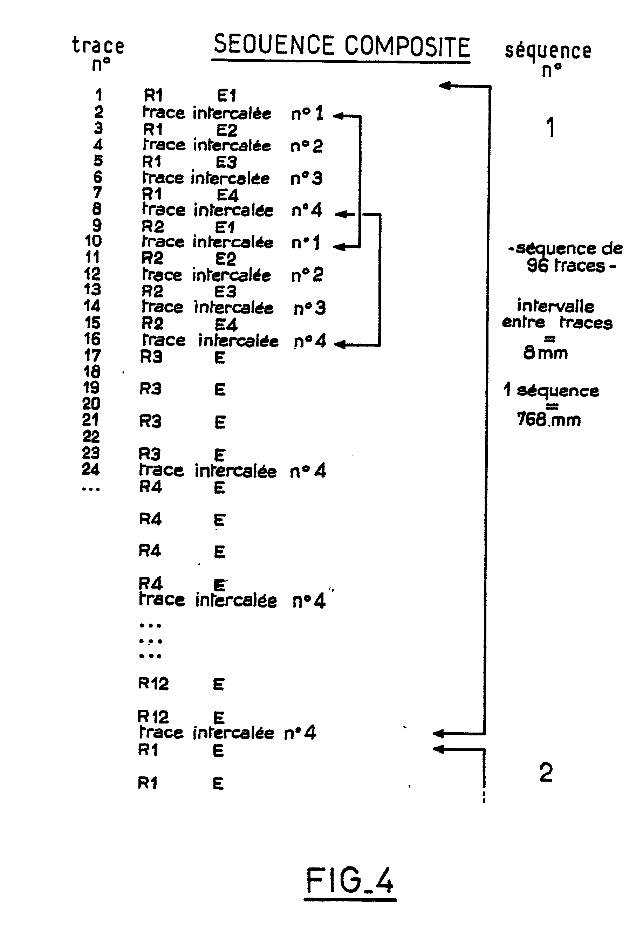

On peut également réaliser une séquence composite du type de celle représentée sur la figure 4 en intercalant quatre traces différentes. Par exemple, entre les traces conventionnelles $R_1$ $E_1$ et $R_1$ $E_2$ est intercalée la trace No 1 ; une trace No 2 est intercalée entre les traces conventionnelles $R_1$ $E_2$ et $R_1$ $E_3$, et ainsi de suite. Cela produit une séquence de 96 traces avec un intervalle entre traces de 8 mm pour une longueur totale de déplacement de l'outil dans le puits, toujours égale à 768 mm.

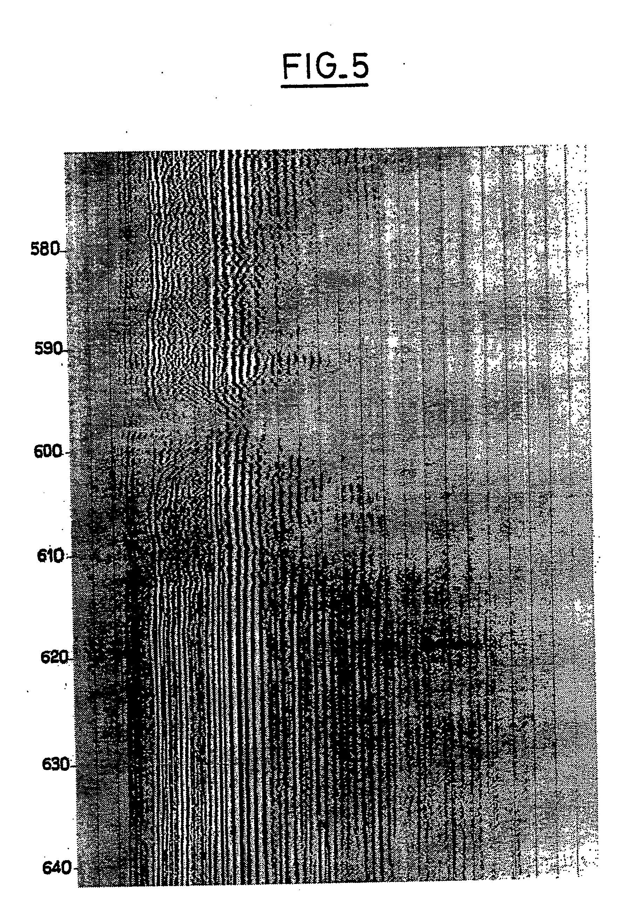

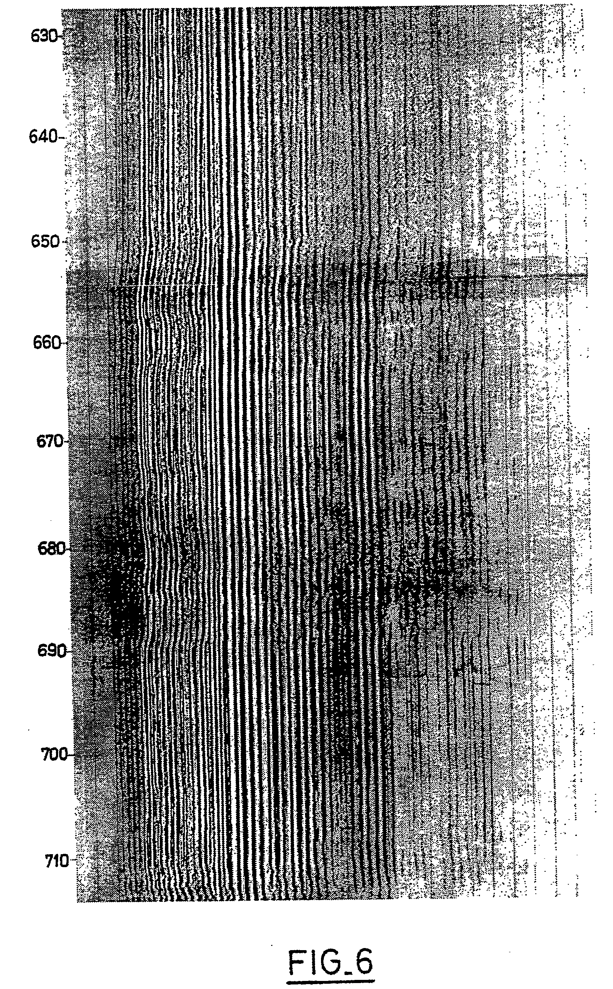

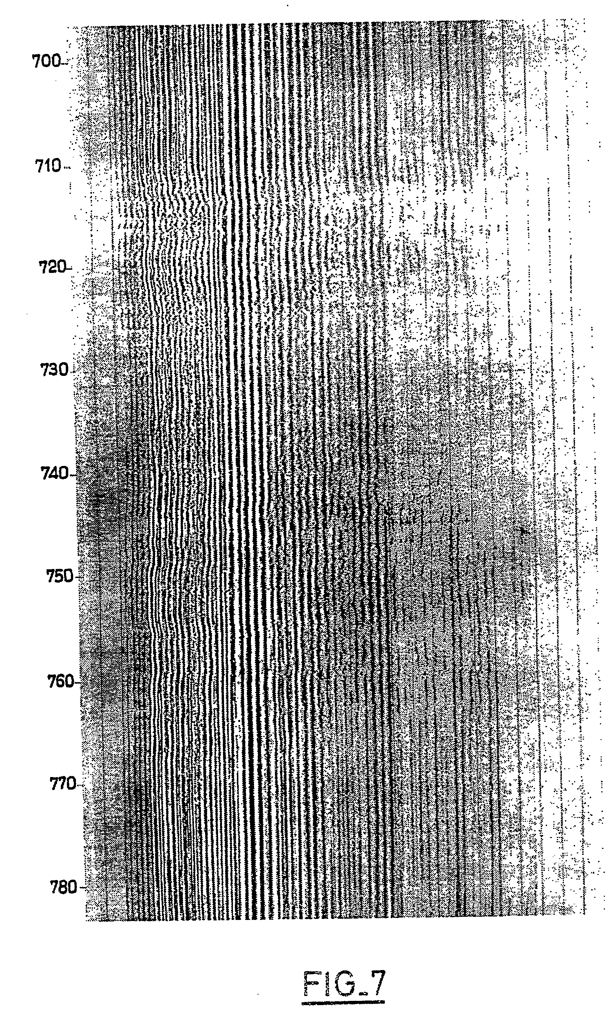

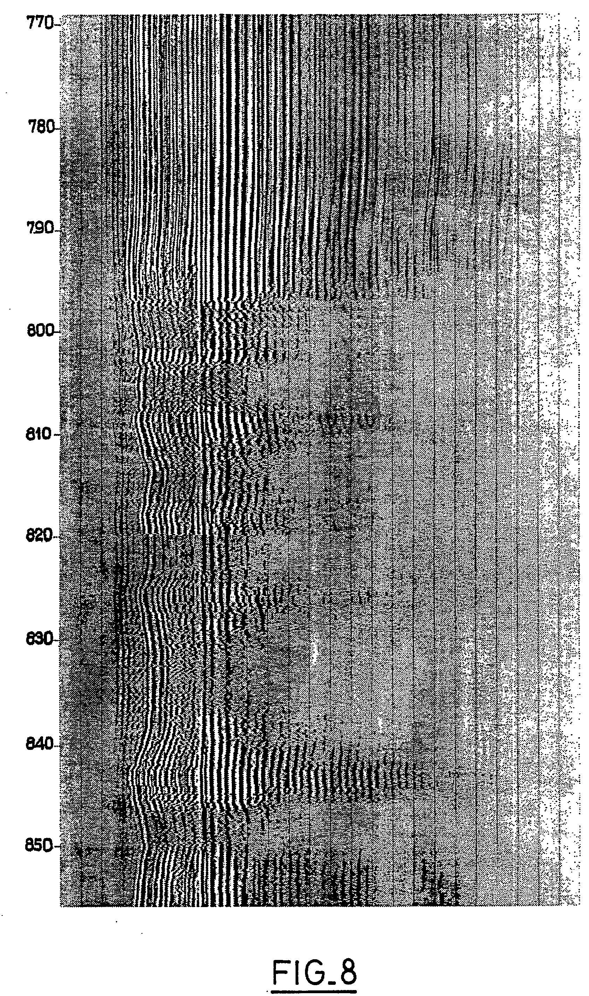

L'ensemble des traces enregistrées est représenté partiellement sur les figures 5 à 8 qui constituent ce qu'il est convenu d'appeler une section temps-profondeur formée de traces équidistantes, la figure 5 étant la partie de section pour une profondeur comprise par exemple entre 570 et 640 m, tandis que les figures 6 à 8 représentent les parties de section pour des profondeurs comprises respectivement entre 630 et 715 m, 700 et 780 m, 770 et 850 m, les ordonnées correspondant à des temps exprimés en millisecondes.

En se reportant aux figures 5 à 8, on peut constater que la section est fortement perturbée ou fortement chaotique entre 550 et 593 m au niveau, en particulier des ondes S de cisaillement et des ondes ST de STONELEY qui arrivent à des temps supérieurs aux temps d'arrivée des ondes S de cisaillement qui, elles-mêmes, arrivent après les ondes P de compression.

Si on compare cette zone avec celle comprise entre 612 et 652 m on voit que l'aspect est très différent.

En se reportant à la figure 6, on constate qu'entre 700 et 713 m, la section est sensiblement homogène, sans changement important en ce qui concerne les caractéristiques des ondes. Cependant, il semble qu'un "phénomène d'interférence" est localisé autour du temps d'arrivée de l'onde S pour les cotes 652 et 685 m.

Les logs conventionnels ont déterminé qu'il y avait bien une zone fracturée entre 586 et 606 m et que manifestement il y avait quelque chose aux cotes 675 m, 687 m, 706 m, 784 m et 790 m sans que des certitudes soient apportées.

Une confirmation et/ou un lever de doute ou une détection autrement impossible à obtenir par d'autres moyens concernant la présence ou non de fractures peuvent être effectués grâce à la présente invention.

On commence par déterminer une lenteur (inverse de la vitesse) des ondes de cisaillement S et de STONELEY ST en utilisant toutes les traces à émetteur commun et toutes les traces à récepteur commun, de manière à réaliser ce qu'on appelle un BHC qui est une opération de compensation des variations de diamètre du puits ou d'une obliquité de l'outil de mesure.

Une fois que le temps d'arrivée de chaque onde a été déterminé, on calcule l'amplitude de chacune desdites ondes, ladite amplitude étant obtenue au moyen d'une fenêtre autour du temps d'arrivée et par le calcul de l'amplitude moyenne dans ladite fenêtre. De même, on détermine, par le même procédé, l'atténuation et la période pour les ondes P, S et de STONELEY ou de tout autre type susceptible d'être utilisé.

En supposant que l'amplitude d'une onde est donnée par la formule :

$$A = K \frac{e^{-(ax + b)}}{x^n}$$

dans laquelle
x représente le trajet acoustique sur lequel on effectue la mesure ;
a représente l'atténuation intrinsèque ;
n représente l'atténuation géométrique ;
b représente un facteur de couplage.

Les coefficients n et b sont calculés et le coefficient utilisé est a.

Pour la section iso-offset représentée, on a utilisé un filtre passe-bande au plus égal à 1-25 KHz pour la détermination de l'amplitude, la période et l'atténuation des ondes P et S, et un filtre passe-bande de 10-20 KHz pour la vitesse de ces ondes. En ce qui concerne les ondes ST on a utilisé un filtrage passe-bande de 1 à 7 KHz.

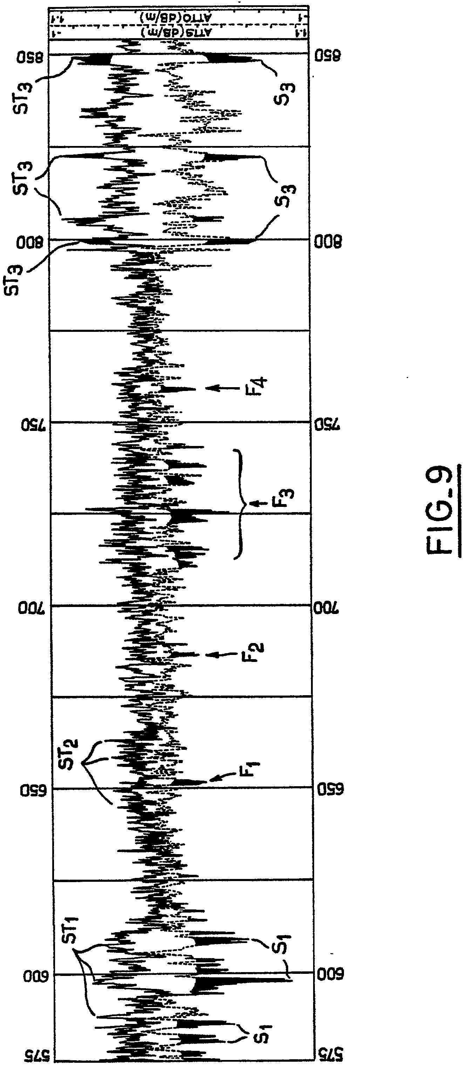

Ensuite, on réalise des logs d'atténuation dont seulement ceux relatifs aux ondes S et ST et pour la profondeur comprise entre 575 et 850 m sont représentés sur la figure 9. Sur cette figure, le log d'atténuation de l'onde S est représenté en pointillés et le log d'atténuation de l'onde ST est en trait plein, le log d'atténuation de l'onde S étant inversé à 180° de façon à avoir des pics d'atténuation de S et de ST dans des directions opposées et donc plus faciles à localiser et à pointer.

A partir des deux logs d'atténuation de S et ST, on détermine pour chacun d'eux quelle est la valeur moyenne dans chaque zone. En effet, la valeur moyenne peut changer d'une zone à l'autre. Il est aisé de voir que la valeur moyenne entre 575 et 625 m est différente de celle comprise entre 625 et 670 m. Une fois que cette valeur moyenne, pour chaque zone, est déterminée, on choisit un seuil, par exemple une fois et demie la valeur moyenne, qui est utilisé pour la localisation des pics d'atténuation sur les deux logs.

En se reportant à la zone comprise entre 575 et 612 m, on mesure la variation de l'atténuation du log d'atténuation de STONELEY qui est faible, les pics $ST_1$ qu'on peut pointer ne sont pas significatifs car n'étant pas très au-dessus de la valeur moyenne, pour la zone considérée. De toutes les façons, le rapport des pics $ST_1$ à la valeur moyenne correspondante est inférieur à 1,5.

Dans la même zone, comprise entre 575 et 612 m, les pics d'atténuation $S_1$ du log de cisaillement sont par contre très significatifs ; le rapport de ces pics $S_1$ à la valeur moyenne de l'atténuation est supérieur à 1,5.

Dans la zone considérée, entre 575 et 612 m, on a une double condition, à savoir une relative stabilité du log d'atténuation de l'onde de STONELEY en même temps que des pics d'atténuation significatifs $S_1$ du log d'atténuation de l'onde de cisaillement S. Une telle double condition détermine la présence de fractures dont les cotes dans le puits foré sont définies par les pics significatifs $S_1$.

Dans la zone comprise entre 612 et 650 m, les logs d'atténuation de l'onde de STONELEY et de cisaillement font apparaître qu'il n'y a pratiquement pas de pics d'atténuation ou qu'en tout cas ils ne sont pas significatifs. Dans ces conditions, aucune fracture n'est détectée.

En procédant aux mesures indiquées précédemment, on peut détecter la présence de fractures $F_1$ à $F_4$ aux cotes 652 m, dans les zones entre 675 et 686m, entre 713 et 728 m et à la cote 758 m respectivement.

Dans la zone comprise entre 642 et 662 m, on procède aux mêmes mesures que précédemment et on détermine que les pics $ST_2$ du log d'atténuation de STONELEY sont significatifs alors que l'atténuation de l'onde de cisaillement est sensiblement constante. Cette double condition amène à conclure qu'il n'y a pratiquement pas de fractures sauf aux cotes 652 et 675 m et qu'on est en présence d'une couche poreuse et/ou perméable. Ainsi, chaque fois qu'on mesure un pic d'atténuation de l'onde de STONELEY qui correspond à une relative stabilité de l'atténuation de l'onde de cisaillement, on conclut à une présence d'une couche poreuse et/ou perméable.

Enfin, en se reportant à la zone comprise entre 800 et 850 m, les mesures des pics d'atténuation des ondes de STONELEY et de cisaillement permettent de déduire qu'ils sont significatifs et qu'ils sont dirigés dans des directions opposées sur la figure 9, en raison de l'inversion faite du log d'atténuation de l'onde de STONELEY. Une fois de plus, on en déduit une double condition -pics significatifs $ST_3$ et $S_3$- qui permet d'affirmer qu'il n'y a pas de fractures, que la couche géologique correspondante n'est ni poreuse ou perméable, mais qu'elle est vraisemblablement une couche d'argile d'argilosité importante.

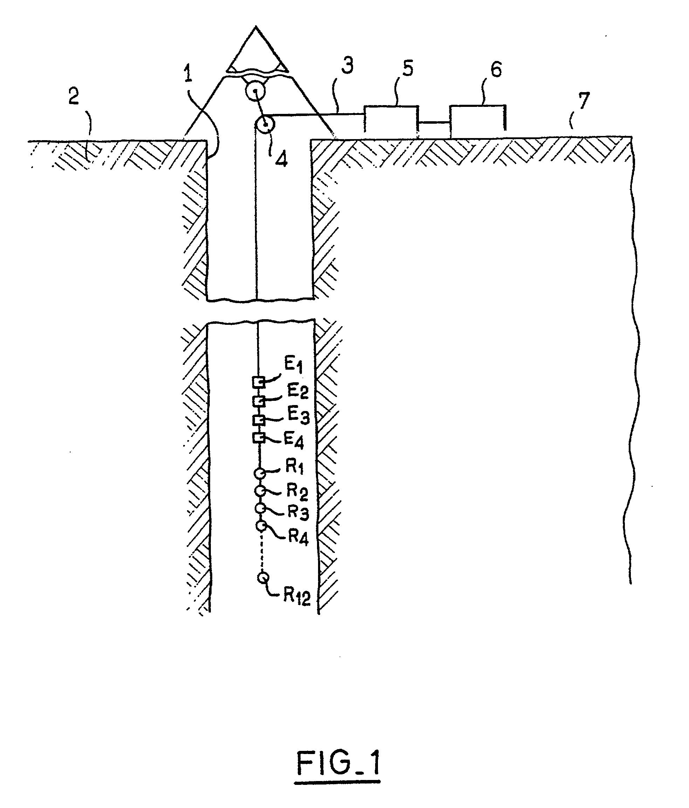

Dans ce qui précède, on a fait référence à différentes hétérogénéités et/ou caractéristiques pétrophysiques des couches géologiques entourant le puits foré qui peut être vertical comme représenté sur la figure 1, mais également un puits peu ou fortement dévié et même un puits horizontal. Dans le cas d'une zone comprenant des fractures présentant une ouverture importante, du type conduit ou drain, les logs d'atténuation de cisaillement et de STONELEY présentent alors des pics significatifs sensiblement en regard les uns des autres, analogues aux pics $S_3$ et $ST_3$ représentés sur la figure 9, qui permettent de détecter une argilosité appréciable dans la zone du puits considérée. Pour lever le doute entre argilosité et fracture de forte ouverture, on se reporte à d'autres mesures telles que celles relatives aux vitesses acoustiques des différentes ondes en présence. En effet, la mesure des vitesses acoustiques des ondes s'étant propagées dans la couche géologique située entre 800 et 850 m, permet de déterminer avec précision si l'on est en présence ou non d'une couche argileuse. Dans l'hypothèse où cette mesure de vitesses acoustiques amène à conclure que ladite couche géologique ne présente pas une argilosité importante, alors les pics significatifs qui sont mesurés sur les parties des logs d'atténuation correspondant à ladite couche géologique permettent d'affirmer sans ambiguïté que des fractures de forte ouverture sont situées dans ladite couche géologique.

Les essais effectués ont montré tout l'intérêt de la présente invention pour la détection et/ou la localisation très précise de certaines hétérogénéités présentées par les couches géologiques entourant un puits. C'est ainsi que dans certains forages, on a pu détecter la présence de fractures de faible ouverture qui n'avaient pu être détectées par les techniques classiques.

## Revendications

1. Procédé de traitement de signaux enregistrés lors d'une diagraphie acoustique dans un puits foré traversant un milieu à explorer, pour la détermination des hétérogénéités et/ou des caractéristiques pétrophysiques des couches géologiques entourant ledit puits foré, du type consistant à sélectionner les enregistrements obtenus à partir d'au moins trois transducteurs dont un est un émetteur et un autre est un récepteur, de manière à rassembler des paires d'enregistrements à émetteur ou récepteur commun, caractérisé en ce qu'il consiste, en outre,

— à déterminer pour des zones d'intérêt préalablement sélectionnées les amplitudes moyennes des ondes reçues en fonction de la profondeur ;
— à élaborer, à partir desdites amplitudes moyennes, des logs d'atténuation desdites ondes ;
— à sélectionner parmi les logs d'atténuation ceux relatifs à l'onde de cisaillement et à l'onde dite de STONELEY ;
— à déterminer pour chaque zone, la valeur moyenne de chacun desdits logs d'atténuation sélectionnés ;
— à repérer dans ladite zone et sur lesdits logs d'atténuation sélectionnés les pics d'atténuation supérieurs à une valeur de seuil prédéterminée ;
— à comparer pour chaque zone au moins les pics du log d'atténuation de l'onde de cisaillement par rapport à la valeur moyenne correspondante de la partie du log d'atténuation de l'onde de STONELEY, de manière à déterminer les variations importantes relatives des atténuations, lesdites variations étant significatives des hétérogénéités ou des caractéristiques pétrophysiques de la couche géologique située autour de ladite zone.

2. Procédé selon la revendication 1, caractérisé en ce qu'un des logs d'atténuation de STONELEY ou de cisaillement est inversé à 180° par rapport à l'autre.

3. Procédé selon la revendication 1, caractérisé en ce qu'une fracture de faible ouverture dans une couche géologique donnée est détectée par la présence d'au moins un pic d'atténuation du log de cisaillement correspondant à une relative stabilité du log de STONELEY par rapport à la valeur moyenne.

4. Procédé selon la revendication 1, caractérisé en ce qu'une couche géologique perméable ou poreuse est détectée par la présence d'au moins un pic d'atténuation du log de STONELEY correspondant à une relative stabilité du log d'atténuation de cisaillement.

5. Procédé selon la revendication 1, caractérisé en ce qu'une couche d'argilosité importante est détectée par la présence d'au moins un pic d'atténuation du log d'atténuation de cisaillement correspondant à au moins un pic d'atténuation du log d'atténuation de STONELEY.

6. Procédé selon la revendication 1, caractérisé en ce qu'une fracture d'ouverture importante dans une couche géologique donnée est détectée par la présence d'au moins un pic significatif du log d'atténuation de cisaillement correspondant à un pic significatif du log d'atténuation de STONELEY après que d'autres mesures telles que mesures des vitesses acoustiques des différentes ondes en présence aient déterminé l'absence d'une argilosité importante dans ladite couche géologique.

7. Procédé selon la revendication 1, caractérisé en ce que ledit procédé est mis en oeuvre à partir d'une séquence d'acquisition composite comprenant un certain nombre d'enregistrements conventionnels correspondant au nombre de transducteurs utilisés et d'enregistrements préalablement choisis qui sont intercalés régulièrement entre lesdits enregistrements conventionnels.

## Claims

1. Process for the processing of signals recorded in the course of acoustic logging in a drilled well traversing a medium to be explored, for the determination of heterogeneities and/or of the petrophysical characteristics of the geological strata surrounding the said drilled well, of the type comprising the steps of selecting the recordings obtained from at least three transducers, of which one is an emitter and another is a receiver, in such a manner as to gather pairs of recordings with a common emitter or receiver, characterized in that it further comprises:

— determining, for previously selected zones of interest, the mean amplitudes of the waves received as a function or the depth;
— producing, from the said mean amplitudes, logs of attenuation of the said waves;
— selecting from among the attenuation logs those relating to the shear wave and to the wave referred to as the STONELEY wave;
— determinig, for each zone, the mean value of each one of the said selected attenuation logs;
— registering, in the said zone and on the said selected attenuation logs, the attenuation peaks exceeding a predetermined threshold value; and
— comparing, for each zone, at least the peaks of the attenuation log of the shear wave in relation to the corresponding mean value of the part of the attenuation log of the STONELEY wave, in such a manner as to determine the significant relative variations of the attenuation, the said variation being representive of the heterogeneities or the petro-physical characteristics of the geological stratum situated around the said zone.

2. The process as claimed in claim 1, wherein one of the STONELEY or shear attenuation logs is inverted by 180° in relation to the other.

3. The process as claimed in claim 1, wherein a fracture having a low degree of opening in a given geological stratum is detected by the presence of at least one attenuation peak of the shear log corresponding to a relative stability of the STONELEY log in relation to the mean value.

4. The process as claimed in claim 1, wherein a permeable or porous geological stratum is detected by the presence of at least one attenuation peak of the STONELEY log corresponding to a relative stability of the shear attenuation log.

5. The process as claimed in claim 1, wherein a stratum having a high degree of shaliness is detected by the presence of at least one attenuation peak of the shear attenuation log corresponding to at least one attenuation peak of the STONELEY attenuation log.

6. The process as claimed in claim 1, wherein a fracture having a high degree of opening in a given geological stratum is detected by the presence of at least one significant peak of the shear attenuation log corresponding to a significant peak of the STONELEY attenuation log after other measurements, such as measurements of the acoustic velocities of the various waves which are present, have determined the absence of a high degree of shaliness in the said geological stratum.

7. The process as claimed in claim 1, wherein the said process is implemented on the basis of a composite acquisition sequence comprising a certain number of conventional recordings corresponding to the number of transducers employed and of previously selected recordings which are regularly inserted between the said conventional recordings.

## Patentansprüche

1. Verfahren zur Verarbeitung von bei einer akustischen Diagraphie in einem ein zu untersuchendes Milieu durchsetzenden Bohrschacht registrierten Signalen zur Bestimmung der Heterogenitäten und/oder petrophysikalischen Eigenschaften der den Bohrschacht umgebenden geologischen Schichten der darin bestehenden Art, die erhaltenen Aufzeichnungen von wenigstens drei Umformern, von denen einer ein Sender und ein anderer ein Empfänger ist, derart auszuwählen, um Aufzeichnungspaare mit gemeinsamem Sender oder Empfänger zu sammeln, dadurch gekennzeichnet, daß es außerdem darin besteht,
– für vorab ausgewählte Zonen von Interesse die mittleren Amplituden der empfangenen Wellen als Funktion der Tiefe zu bestimmen;
– aus diesen mittleren Amplituden Schwächungs-log-Werte dieser Wellen zu ermitteln;

– unter den Schwächungs-log-Werten diejenigen bezüglich der Scherungswelle und der sog. STONELEY-Welle auszuwählen;
– für jede Zone den Mittelwert jedes der ausgewählten Schwächungs-log-Werte zu bestimmen;
– in dieser Zone und auf diesen ausgewählten Schwächungs-log-Werten die Schwächungsspitzen über einem vorbestimmten Schwellenwert zu markieren;
– für jede Zone wenigstens die Spitzen des Schwächungs-log-Wertes der Scherungswelle gegenüber dem entsprechenden Mittelwert des Teils des Schwächungs-log-Wertes der STONELEY-Welle derart zu vergleichen, um die wesentlichen relativen Änderungen der Schwächungen zu bestimmen, wobei diese Änderungen für die Heterogenitäten oder petrophysikalischen Eigenschaften der um diese Zone liegenden geologischen Schicht kennzeichnend sind.

2. Verfahren nach dem Anspruch 1, dadurch gekennzeichnet, daß einer der STONELEY- oder Scherungsschwächungs-log-Werte gegenüber dem anderen um 180° umgekehrt wird.

3. Verfahren nach dem Anspruch 1, dadurch gekennzeichnet, daß ein Bruch geringer Öffnung in einer gegebenen geologischen Schicht durch die Gegenwart wenigstens einer Schwächungsspitze des Scherungs-log-Wertes entsprechend einer relativen Stabilität des STONELEY-log-Wertes gegenüber dem Mittelwert erfaßt wird.

4. Verfahren nach dem Anspruch 1, dadurch gekennzeichnet, daß eine durchlässige oder poröse geologische Schicht durch die Gegenwart wenigstens einer Schwächungsspitze des STONELEY-log-Wertes entsprechend einer relativen Stabilität des Scherungsschwächungs-log-Wertes erfaßt wird.

5. Verfahren nach dem Anspruch 1, dadurch gekennzeichnet, daß eine Schicht erheblichen Tongehalts durch die Gegenwart wenigstens einer Schwächungsspitze des Scherungsschwächungs-log-Wertes entsprechend wenigstens einer Schwächungsspitze des STONELEY-Schwächungs-log-Wertes erfaßt wird.

6. Verfahren nach dem Anspruch 1, dadurch gekennzeichnet, daß ein Bruch erheblicher Öffnung in einer gegebenen geologischen Schicht durch die Gegenwart wenigstens einer bedeutenden Spitze des Scherungsschwächungs-log-Wertes entsprechend einer bedeutenden Spitze des STONELEY-Schwächungs-log-Wertes erfaßt wird, nachdem andere Messungen, wie Messungen der akustischen Geschwindigkeiten der verschiedenen vorhandenen Wellen, die Abwesenheit eines erheblichen Tongehalts in dieser geologischen Schicht bestimmt haben.

7. Verfahren nach dem Anspruch 1, dadurch gekennzeichnet, daß das Verfahren ausgehend von einer Folge zusammengesetzter Heranziehung, die eine gewisse Zeit von herkömmlichen Aufzeichnungen entsprechend der Zahl verwendeter Umformer und von vorab gewählten Aufzeichnungen, die regelmäßig zwischen den herkömmlichen Aufzeichnungen eingefügt sind, aufweist, durchgeführt wird.

FIG_1

## SEQUENCE CLASSIQUE

| | |
|------|------|
| R1   | E1   |
| R1   | E2   |
| R1   | E3   |
| R1   | E4   |
| R2   | E1   |
| R2   | E2   |
| R2   | E3   |
| R2   | E4   |
| R3   | E1   |
| R3   | E2   |
| R3   | E3   |
| R3   | E4   |
| R4   | E1   |
| R4   | E2   |
| R4   | E3   |
| R4   | E4   |
| ...  |      |
| ...  |      |
| ...  |      |
| R12  | E3   |
| R12  | E4   |
| R1   | E1   |
| R1   | E2   |

-séquence de
48 tracesintervalle entre
traces
=
16 mm

1 séquence
=
48 x 16 mm
=
768 mm

## FIG_2

## SEQUENCE COMPOSITE

| | |
|---|---|
| R1 | E1 |
| R4 | E2 |
| R1 | E2 |
| R1 | E3 |
| R1 | E4 |
| R2 | E1 |
| R4 | E2 |
| R2 | E2 |
| R2 | E3 |
| R2 | E4 |
| R3 | E1 |
| R4 | E2 |
| R3 | E2 |
| R3 | E3 |
| R3 | E4 |
| R4 | E1 |
| R4 | E2 |
| R4 | E3 |
| R4 | E4 |
| ... | |
| ... | |
| ... | |
| R12 | E3 |
| R12 | E4 |
| R1 | E1 |
| R1 | E2 |

Une même trace intercalée toutes les 4 traces

Intervalle entre les traces intercalées = 64mm

1 séquence

=

768 mm

## FIG.3

| trace n° | SEQUENCE COMPOSITE | séquence n° |
|---|---|---|

```
trace                                              séquence
 n°          SEQUENCE COMPOSITE                        n°

  1     R1        E1
  2     trace intercalée    n°1
  3     R1        E2                                      1
  4     trace intercalée    n°2
  5     R1        E3
  6     trace intercalée    n°3
  7     R1        E4
  8     trace intercalée    n°4
  9     R2        E1
 10     trace intercalée    n°1                   -séquence de
 11     R2        E2                                96 traces-
 12     trace intercalée    n°2
 13     R2        E3                                intervalle
 14     trace intercalée    n°3                    entre traces
 15     R2        E4                                    =
 16     trace intercalée    n°4                        8mm
 17     R3        E
 18
 19     R3        E                                1 séquence
 20                                                    =
 21     R3        E                                 768 mm
 22
 23     R3        E
 24     trace intercalée n°4
 ...    R4        E

        R4        E

        R4        E

        R4        E
        trace intercalée   n°4

        ...
        ...
        ...

        R12       E

        R12       E
        trace intercalée n°4
        R1        E

        R1        E                                    2
```

## FIG_4

# FIG.5

FIG_6

FIG_7

FIG_8

FIG_9